# EUROPEAN PATENT SPECIFICATION

(11) **EP 3 783 219 B1**
(45) Date of publication and mention of the grant of the patent: **24.01.2024**
(21) Application number: 20192245.7
(22) Date of filing: 21.08.2020
(51) Int. Cl.: F02D 41/22, F01M 1/08, F01M 1/16, F02D 41/12, F02D 17/04

(54) **ABNORMALITY DIAGNOSTIC DEVICE FOR OIL JET CONTROL VALVE OF INTERNAL COMBUSTION ENGINE**
FEHLERDIAGNOSEVORRICHTUNG FÜR EIN ÖLSTRAHLSTEUERVENTIL EINES VERBRENNUNGSMOTORS
DISPOSITIF DE DIAGNOSTIC D'ANOMALIE POUR UNE SOUPAPE DE RÉGLAGE DE JET D'HUILE D'UN MOTEUR À COMBUSTION INTERNE

(30) Priority: 22.08.2019 JP 2019151860
(43) Date of publication of application: 24.02.2021
(73) Proprietor: Suzuki Motor Corporation, Shizuoka 432-8611 (JP)
(72) Inventor: Iga, Tatsunari, Shizuoka, 432-8611 (JP); Okada, Manabu, Shizuoka, 432-8611 (JP); Saito, Shinichiro, Shizuoka, 432-8611 (JP); Tsujimura, Nobutoshi, Shizuoka, 432-8611 (JP)
(74) Representative: Henkel & Partner mbB

(56) References cited:
- JP-A- 2014 098 344
- KR-B1- 101 461 901
- US-A1- 2014 352 658
- US-A1- 2019 078 493
- US-B2- 8 734 122

## Description

### Technical Field

The present invention relates to an abnormality diagnostic device for an oil jet control valve of an internal combustion engine.

### Background Art

Patent Literature 1 discloses a technique of performing abnormality diagnosis for an oil jet based on a change in engine rotation speed at a time when an operating state of the oil jet is controlled to be ON and OFF during idling operation.

### Citation List

### Patent Literature

Patent Literature 1: JP-A-2013-209915
JP 2014 098 344 A discloses an abnormality diagnostic device comprising a hydraulic pressure introduction port linked to a main oil hole, and a valve pressure port linked to a back pressure space of an oil jet switching valve. A hydraulic pressure sensor senses change in hydraulic pressure of the main oil hole in when switching the oil jet switching valve and when the amount of change in hydraulic pressure is equal to or less than a predetermined amount, it is determined that the opening/closing operation of the oil jet switching valve 8 is abnormal.
US 8 734 122 B2 A discloses a control system which includes an oil pump module and a diagnostic module. The oil pump module, based on engine operating conditions, selectively generates a first mode request signal to initiate a first transition from operating an oil pump of an engine in one of a first pressure mode and a second pressure mode to operating the oil pump in another one of the first pressure mode and the second pressure mode. The second pressure mode is different from the first pressure mode. The diagnostic module diagnoses a pump fault when a first oil pressure change associated with the consecutive transitions is less than a first predetermined pressure change.

### Summary of Invention

### Technical Problem

However, when load of an engine changes due to drive of an auxiliary machine or the like during the idling operation, it is considered that the engine rotation speed may become unstable, and that the abnormality diagnosis for the oil jet cannot be performed accurately.

Therefore, an object of the present invention is to provide an abnormality diagnostic device for an oil jet control valve of an internal combustion engine which is capable of improving accuracy of abnormality diagnosis for an oil jet.

### Solution to Problem

In order to solve the above problems, the present invention provides an abnormality diagnostic device for an oil jet control valve of an internal combustion engine according to claim 1. The dependent claims are directed to different advantageous aspects of the invention.

### Advantageous Effects of Invention

As described, according to the present invention, accuracy of abnormality diagnosis for an oil jet can be improved.

### Brief Description of Drawings

[Fig. 1] Fig. 1 is a schematic configuration diagram of an abnormality diagnostic device for an oil jet control valve of an internal combustion engine according to an embodiment of the present invention.
[Fig. 2] Fig. 2 is a flowchart illustrating a procedure of abnormality diagnosis processing of an abnormality diagnostic device for an oil jet control valve of an internal combustion engine according to an embodiment of the present invention.
[Fig. 3] Fig. 3 is a time chart illustrating a change in oil pressure of an oil jet gallery in a case where an oil jet valve is diagnosed as normal by abnormality diagnosis processing of an abnormality diagnostic device for an oil jet control valve of an internal combustion engine according to an embodiment of the present invention.
[Fig. 4] Fig. 4 is a time chart illustrating a change in oil pressure of an oil jet gallery in a case where an oil jet valve is diagnosed as abnormal by abnormality diagnosis processing of an abnormality diagnostic device for an oil jet control valve of an internal combustion engine according to an embodiment of the present invention.

### Description of Embodiments

An abnormality diagnostic device for an oil jet control valve of an internal combustion engine according to an embodiment of the present invention includes:
an oil pump that is driven by rotation of an internal combustion engine;
an oil jet that injects oil toward a piston of the internal combustion engine;
an oil jet gallery that sends oil from the oil pump to the oil jet;
a control valve that is disposed at the oil jet gallery and controls flow of oil to the oil jet;
an oil pressure sensor that is provided upstream of the control valve in the oil jet gallery; and
a control unit that controls opening and closing of the control valve, wherein
the control unit performs abnormality diagnosis control for determining an abnormality in the control valve, in a case where the internal combustion engine is in a fuel-cut operation state and a predetermined condition is satisfied, and
in the abnormality diagnosis control, the control unit sets the control valve to an opened state, and sets the control valve to a closed state after a predetermined period of time elapses in which oil pressure of the oil jet gallery is stabilized, and determines that there is the abnormality in the control valve when a difference between oil pressure of the oil jet gallery at a time when the control valve is opened and oil pressure of the oil jet gallery at time when the control valve is closed after the predetermined period of time elapses is smaller than a predetermined difference.

Accordingly, the abnormality diagnostic device for an oil jet control valve of an internal combustion engine according to an embodiment of the present invention can improve the accuracy of abnormality diagnosis for an oil jet.

### Embodiment

Hereinafter, an abnormality diagnostic device for an oil jet control valve of an internal combustion engine according to an embodiment of the present invention will be described in detail with reference to the drawings.

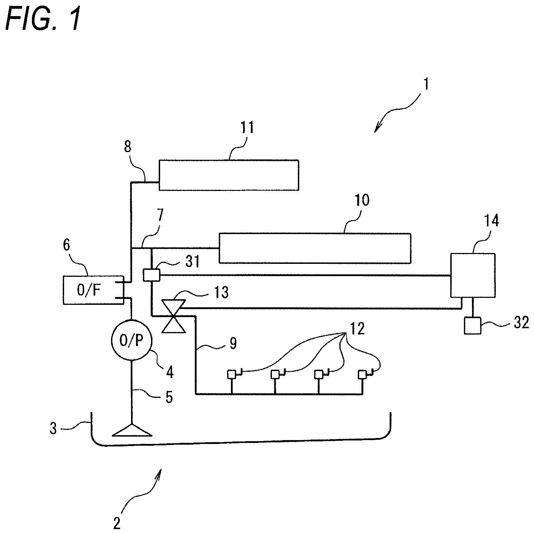

In Fig. 1, a vehicle 1, on which an abnormality diagnostic device for an oil jet control valve of an internal combustion engine according to an embodiment of the present invention is mounted, includes an engine 2 as an internal combustion engine and a control unit 14.

The engine 2 includes at least one cylinder. For example, the engine 2 is a straight-four engine including four cylinders. A number of the cylinder is not limited to four.

The engine 2 includes a cylinder block (not shown), a cylinder head (not shown) fastened to an upper portion of the cylinder block, and an oil pan 3 fastened to a lower portion of the cylinder block. Oil (not shown) is stored in the oil pan 3.

A cylinder serving as a cylinder of the engine 2 (not shown) is formed in the cylinder block. A piston (not shown) that can vertically reciprocate in the cylinder is housed in the cylinder.

The engine 2 is a so-called 4-cycle gasoline engine that performs a series of four strokes including an intake stroke, a compression stroke, an expansion stroke, and an exhaust stroke while the piston reciprocates twice in the cylinder.

An oil pump 4 sucks up the oil stored in the oil pan 3 via a strainer 5. As the oil pump 4, for example, a mechanical pump that is driven by using output of the engine 2 is used.

An oil filter 6 filters oil discharged from the oil pump 4.
The oil discharged from the oil pump 4 flows through the oil filter 6 to 3 systems of oil gallery, that is, a main gallery 7, a head gallery 8, and an oil jet gallery 9.

The oil distributed to the main gallery 7 is supplied to each main bearing 10 that supports a crankshaft (not shown).

The oil distributed to the head gallery 8 is supplied to a valve mechanism 11 that is configured with a camshaft, an intake valve, an exhaust valve, and the like.

The oil distributed through an oil jet valve 13 serving as a control valve to the oil jet gallery 9 is supplied to each oil jet 12.

The oil jet 12 injects the oil toward the piston of the engine 2. An injection quantity of the oil injected from an injection nozzle of the oil jet 12 changes according to supply pressure of the oil.

The oil jet valve 13 controls a supply flow rate and the supply pressure of the oil that is supplied from the oil pump 4 to the oil jet 12. Opening and closing of the oil jet valve 13 are controlled by the control unit 14.

An oil temperature and pressure sensor 31 serving as an oil pressure sensor is provided between the oil jet valve 13 and the main gallery 7 that is upstream of the oil jet valve 13 in a direction in which the oil flows.

The control unit 14 is configured with a computer unit that includes a central processing unit (CPU), a random access memory (RAM), a read only memory (ROM), a flash memory, an input port, and an output port.

In the ROM of the computer unit, programs for causing the computer unit to function as the control unit 14 are stored together with various control constants, various maps, and the like. That is, the computer unit functions as the control unit 14 by the CPU executing a program stored in the ROM.

In addition to the oil temperature and pressure sensor 31, various sensors such as an engine rotation speed sensor 32 are connected to the input port of the control unit 14.

Based on rotation of a crankshaft of the engine 2, the engine rotation speed sensor 32 outputs an engine rotation speed pulse signal having a number of pulses proportional to a rotation speed of the crankshaft. The control unit 14 can detect the engine rotation speed based on the engine rotation speed pulse signal.

On the other hand, various control targets such as the oil jet valve 13 described above are connected to the output port of the control unit 14.

In the present embodiment, the control unit 14 diagnoses an abnormality of the oil jet valve 13.

The control unit 14 perform an abnormality diagnosis control for determining an abnormality of the oil jet valve 13 in a fuel-cut operation state of the engine 2.

In the abnormality diagnosis control, the control unit 14 sets the oil jet valve 13 to an open state in the fuel-cut operation state of the engine 2, and sets the oil jet valve 13 to a closed state after a predetermined period of time elapses in which oil pressure of the oil jet gallery 9 is stabilized.

In the abnormality diagnosis control, when a difference at this time between oil pressure of the oil jet gallery 9 at a time when the oil jet valve 13 is set to the opened state and oil pressure of the oil jet gallery 9 at a time when the oil jet valve 13 is set to the closed state is smaller than a predetermined difference, the control unit 14 determines that there is the abnormality in the oil jet valve 13.

In the fuel-cut operation state of the engine 2, the control unit 14 may perform the abnormality diagnosis control of the oil jet valve 13 when the oil pressure of the oil jet gallery 9 is lower than a predetermined value or when the engine rotation speed is lower than a predetermined rotation speed.

The control unit 14 may perform the abnormality diagnosis control of the oil jet valve 13 when a decreasing gradient (change amount) of the engine rotation speed is smaller than a predetermined change amount.

The control unit 14 may fix duty of the oil pump 4 before the abnormality diagnosis control of the oil jet valve 13 is performed.

When an oil temperature of the oil jet gallery 9 is lower than a predetermined temperature, the control unit 14 prohibits the abnormality diagnosis control of the oil jet valve 13.

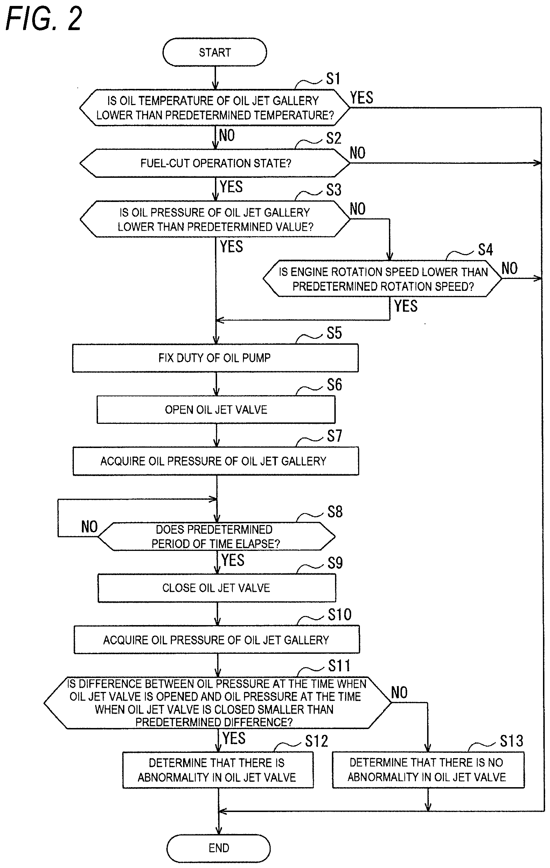

Abnormality diagnosis processing by the abnormality diagnostic device for an oil jet control valve of an internal combustion engine according to the present embodiment which is configured as described above will be described with reference to Fig. 2. The abnormality diagnosis processing to be described below is started when the control unit 14 starts operations, and is executed at a preset time interval.

In step S1, the control unit 14 determines whether an oil temperature of the oil jet gallery 9 is lower than a predetermined temperature. When it is determined that the oil temperature of the oil jet gallery 9 is lower than the predetermined temperature, the control unit 14 ends the processing.

When it is determined that the oil temperature of the oil jet gallery 9 is not lower than the predetermined temperature, the control unit 14 determines in step S2 whether the engine 2 is in a fuel-cut operation state. When it is determined that the engine 2 is not in the fuel-cut operation state, the control unit 14 ends the processing.

When it is determined that the engine 2 is in the fuel-cut operation state, the control unit 14 determines in step S3 whether oil pressure of the oil jet gallery 9 is lower than a predetermined value.

When it is determined that the oil pressure of the oil jet gallery 9 is not lower than the predetermined value, the control unit 14 determines in step S4 whether an engine rotation speed is lower than a predetermined rotation speed. When it is determined that the engine rotation speed is not lower than the predetermined rotation speed, the control unit 14 ends the processing.

When it is determined in step S3 that the oil pressure of the oil jet gallery 9 is lower than the predetermined value or when it is determined in step S4 that the engine rotation speed is lower than the predetermined rotation speed, the control unit 14 fixes duty of the oil pump 4 in step S5.

In step S6, the control unit 14 opens the oil jet valve 13.
In step S7, the control unit 14 acquires the oil pressure of the oil jet gallery 9 by the oil temperature and pressure sensor 31.

In step S8, the control unit 14 determines whether a predetermined period of time elapses in which the oil pressure of the oil jet gallery 9 is stabilized. When it is determined that the predetermined period of time does not elapse, the control unit 14 repeats the process of step S8.

When it is determined that the predetermined time has elapsed, in step S9, the control unit 14 closes the oil jet valve 13.

In step S10, the control unit 14 acquires the oil pressure of the oil jet gallery 9 by the oil temperature and pressure sensor 31.

In step S11, the control unit 14 determines whether a difference between the oil pressure of the oil jet gallery 9 at the time when the oil jet valve 13 is opened and the oil pressure of the oil jet gallery 9 at the time when the oil jet valve 13 is closed is smaller than a predetermined difference.

When it is determined that the difference between the oil pressure of the oil jet gallery 9 at the time when the oil jet valve 13 is opened and the oil pressure of the oil jet gallery 9 at the time when the oil jet valve 13 is closed is smaller than the predetermined difference, the control unit 14 determines in step S12 that there is an abnormality in the oil jet valve 13, and ends the processing.

When it is determined that the difference between the oil pressure of the oil jet gallery 9 at the time when the oil jet valve 13 is opened and the oil pressure of the oil jet gallery 9 at the time when the oil jet valve 13 is closed is not smaller than the predetermined difference, the control unit 14 determines in step S13 that there is no abnormality in the oil jet valve 13, and ends the processing.

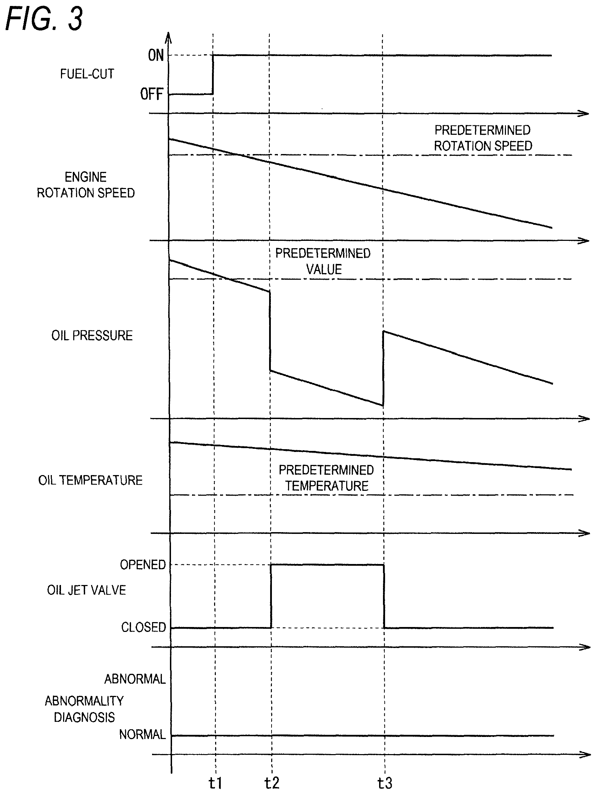

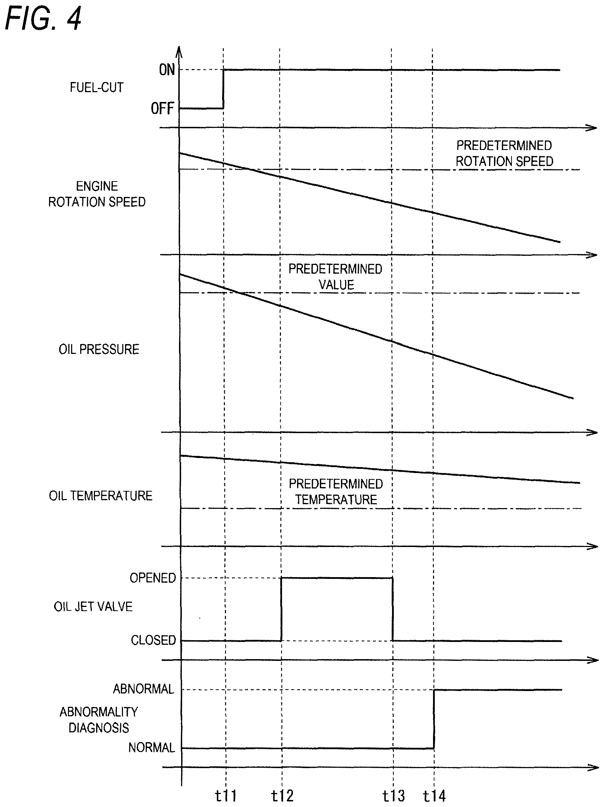

The operations of such abnormality diagnosis processing will be described with reference to Figs. 3 and 4. Fig. 3 illustrates a case where it is determined that there is no abnormality in the oil jet valve 13.

When at a time point t1, the engine 2 is set to the fuel-cut operation state. At a time point t2 after the time point t1, when the engine rotation speed is lower than the predetermined rotation speed, the oil pressure of the oil jet gallery 9 is lower than the predetermined value, and the oil temperature of the oil jet gallery 9 is equal to or higher than the predetermined temperature, the oil jet valve 13 is opened and the oil pressure of the oil jet gallery 9 is acquired.

Thereafter, at a time point t3 after elapse of the predetermined period of time in which the oil pressure of the oil jet gallery 9 is stabilized, the oil jet valve 13 is closed and the oil pressure of the oil jet gallery 9 is acquired.

Since the difference between the oil pressure of the oil jet gallery 9 after opening of the oil jet valve 13 at the time point t2 and the oil pressure of the oil jet gallery 9 after closing of the oil jet valve 13 at the time point t3 is equal to or larger than the predetermined difference, it is determined that the oil jet valve 13 is normal.

Fig. 4 illustrates a case where it is determined that the oil jet valve 13 is abnormal.

When at a time point t11, the engine 2 is set to the fuel-cut operation state. At a time point 12 after the time point t11, when the engine rotation speed is lower than the predetermined rotation speed, the oil pressure of the oil jet gallery 9 is lower than the predetermined value, and the oil temperature of the oil jet gallery 9 is equal to or higher than the predetermined temperature, the oil jet valve 13 is opened and the oil pressure of the oil jet gallery 9 is acquired.

Thereafter, at a time point t13 after elapse of the predetermined period of time in which the oil pressure of the oil jet gallery 9 is stabilized, the oil jet valve 13 is closed and the oil pressure of the oil jet gallery 9 is acquired.

Since the difference between the oil pressure of the oil jet gallery 9 after opening of the oil jet valve 13 at the time point 112 and the oil pressure of the oil jet gallery 9 after closing of the oil jet valve 13 at the time point 113 is smaller than the predetermined difference, it is determined at a time point t14 that the oil jet valve 13 is abnormal.

As described in the present embodiment, in the case of fuel-cut operation state of the engine 2, when the difference, between the oil pressure of the oil jet gallery 9 at the time when the oil jet valve 13 is in an opened state and the oil pressure of the oil jet gallery 9 at the time when the oil jet valve 13 is in a closed state after the predetermined period of time elapses in which the oil pressure of the oil jet gallery 9 is stabilized, is smaller than the predetermined difference, it is determined that there is an abnormality in the oil jet valve 13.

By performing the abnormality diagnosis for the oil jet valve 13 during fuel-cut in which combustion in the engine 2 is not performed, not during idling operation in which the engine rotation speed is not stabilized, the influence of rotational fluctuation due to combustion can be eliminated, and the accuracy of the abnormality diagnosis can be improved.

In addition, instead of the engine rotation speed, by using the difference in the oil pressure of the oil jet gallery 9 for determination of the abnormality diagnosis, the accuracy of the abnormality diagnosis can be improved.

Further, if the oil jet valve 13 is normal, a difference in the oil pressure of the oil jet gallery 9 occurs at the opened state and the closed state of the oil jet valve 13, and the oil pressure of the oil jet gallery 9 gradually decreases accompanying decrease of the rotation speed of engine 2 during fuel-cut, therefore it is difficult to determine, at the time when the oil jet valve13 is opened after being closed, whether the oil pressure of the oil jet gallery 9 is decreasing due to closing and opening of the oil jet valve 13 or whether the oil pressure of the oil jet gallery 9 is decreasing due to decrease of the engine rotation speed, and an erroneous determination may be made.

Therefore, by using for the determination the oil pressure difference caused by rise of the oil pressure of the oil jet gallery 9 at the time when the oil jet valve 13 is closed after being opened, the accuracy of the abnormality diagnosis can be improved.

In addition, in the fuel-cut operation state of the engine 2, when the oil pressure of the oil jet gallery 9 is lower than the predetermined value or when the engine rotation speed is lower than the predetermined rotation speed, an abnormality of the oil jet valve 13 is diagnosed.

When the oil pressure of the oil jet gallery 9 is equal to or greater than the predetermined value, oil cannot be supplied from the oil pump 4 at a stable oil pressure, and thus the oil pressure of the oil jet gallery 9 may become unstable.

Even when the engine rotation speed is equal to or greater than the predetermined rotation speed, the oil cannot be supplied from the oil pump 4 at a stable oil pressure, and the oil pressure of the oil jet gallery 9 may become unstable.

By performing the abnormality diagnosis in a state in which the oil can be supplied from the oil pump 4 at a stable oil pressure, the accuracy of the abnormality diagnosis can be improved.

When a change amount of the engine rotation speed is smaller than a predetermined change amount, an abnormality of the oil jet valve 13 is diagnosed.

Since a change amount in the oil pressure of the oil jet gallery 9 is also increased when the change amount of the engine rotation speed is large, the change in the oil pressure of the oil jet gallery 9 accompanying the opening and closing of the oil jet valve 13 may be erroneously determined.

Therefore, by performing the abnormality diagnosis when the change amount of the engine rotation speed is smaller than the predetermined change amount, the accuracy of the abnormality diagnosis can be improved.

When the oil temperature of the oil jet gallery 9 is lower than the predetermined temperature, the abnormality diagnosis for the oil jet valve 13 is prohibited.

A condition is considered in which viscosity of the oil increases when the oil is in a low temperature state and the oil pressure difference is unlikely to occur. Therefore, by prohibiting the abnormality diagnosis when the oil temperature of the oil jet gallery 9 is lower than the predetermined temperature, the accuracy of the abnormality diagnosis can be improved.

Before the abnormality diagnosis for the oil jet valve 13 is performed, the duty of the oil pump 4 is fixed. Therefore, by fixing the duty of the oil pump 4 and reducing the oil pressure, the accuracy of the abnormality diagnosis can be improved.

Although an example, in which the control unit 14 performs various determinations and calculations based on various kinds of sensor information, is described in the present embodiment, the present invention is not limited thereto. The vehicle 1 may include a communication unit that is capable of communicating with a device outside the vehicle such as an external server, the various determinations and calculations may be performed by the device outside the vehicle based on detection information of various sensors which is transmitted from the communication unit, the communication unit may receive determination results and calculation results, and various types of control may be performed using the received determination results and calculation results.

Although an embodiment of the present invention has been disclosed, it will be apparent to those skilled in the art that modifications can be made without departing from the scope of the present invention as defined by the appended claims.

### Reference Signs List

1 vehicle
2 engine (internal combustion engine)
4 oil pump
9 oil jet gallery
12 oil jet
13 oil jet valve (control valve)
14 control unit
31 oil temperature and pressure sensor (oil pressure sensor)
32 engine rotation speed sensor

## Claims

1. An abnormality diagnostic device for an oil jet control valve of an internal combustion engine, the abnormality diagnostic device comprising:
an oil pump (4) that is driven by rotation of an internal combustion engine (2);
an oil jet (12) that injects oil toward a piston of the internal combustion engine (2);
an oil jet gallery (9) that sends oil from the oil pump (4) to the oil jet (12);
a control valve (13) that is disposed at the oil jet gallery (9) and controls flow of oil to the oil jet (12);
an oil pressure sensor (31) that is provided upstream of the control valve (13) in the oil jet gallery (9); and
a control unit (14) that controls opening and closing of the control valve (13), wherein
the control unit (14) performs abnormality diagnosis control for determining an abnormality in the control valve (13), in a case where the internal combustion engine (2) is in a fuel-cut operation state and a predetermined condition is satisfied, and
in the abnormality diagnosis control, the control unit (14) sets the control valve (13) to an opened state, and sets the control valve (13) to a closed state after a predetermined period of time elapses in which oil pressure of the oil jet gallery (9) is stabilized, and determines that there is the abnormality in the control valve (13) when a difference between oil pressure of the oil jet gallery (9) at a time when the control valve (13) is opened and oil pressure of the oil jet gallery (9) at time when the control valve (13) is closed after the predetermined period of time elapses is smaller than a predetermined difference.

2. The abnormality diagnostic device for an oil jet control valve of an internal combustion engine according to claim 1, wherein
the predetermined condition includes that oil pressure of the oil jet gallery (9) is lower than a predetermined value or that a rotation speed of the internal combustion engine (2) is lower than a predetermined rotation speed.

3. The abnormality diagnostic device for an oil jet control valve of an internal combustion engine according to claim 1 or 2, wherein
the predetermined condition includes that a change amount of a rotation speed of the internal combustion engine (2) is smaller than a predetermined change amount.

4. The abnormality diagnostic device for an oil jet control valve of an internal combustion engine according to any one of claims 1 to 3, wherein
the control unit (14) prohibits the abnormality diagnosis control when an oil temperature of the oil jet gallery (9) is lower than a predetermined temperature.

## Patentansprüche

1. Eine Anomalie-Diagnosevorrichtung für ein ÖlstrahlSteuerventil eines Verbrennungsmotors, wobei die Anomalie-Diagnosevorrichtung Folgendes umfasst:
eine Ölpumpe (4), die durch die Drehung eines Verbrennungsmotors (2) angetrieben wird;
eine Öldüse (12), die Öl in Richtung eines Kolbens des Verbrennungsmotors (2) spritzt;
eine Ölstrahlgalerie (9), die Öl von der Ölpumpe (4) zur Öldüse (12) leitet;
ein Steuerventil (13), das an der Ölstrahlgalerie (9) angeordnet ist und den Ölfluss zur Öldüse (12) steuert;
einen Öldrucksensor (31), der stromaufwärts des Steuerventils (13) im Ölstrahlkanal (9) vorgesehen ist; und
eine Steuereinheit (14), die das Öffnen und Schließen des Steuerventils (13) steuert, wobei
die Steuereinheit (14) eine Anomaliediagnosesteuerung durchführt, um eine Anomalie im Steuerventil (13) zu bestimmen, in einem Fall, in dem sich der Verbrennungsmotor (2) in einem Zustand mit Kraftstoffabschaltung befindet und eine vorbestimmte Bedingung erfüllt ist, und
bei der Anomalie-Diagnosesteuerung die Steuereinheit (14) das Steuerventil (13) in einen geöffneten Zustand setzt und das Steuerventil (13), nachdem eine vorbestimmte Zeitspanne verstrichen ist, in der sich der Öldruck des Öls in dem Ölstrahlkanal (9) stabilisiert, in einen geschlossenen Zustand setzt, und bestimmt, dass im Steuerventil (13) eine Abweichung vorliegt, wenn eine Differenz zwischen dem Öldruck des Ölstrahlkanals (9) zu einem Zeitpunkt, zu dem das Steuerventil (13) geöffnet ist, und dem Öldruck des Ölstrahlkanals (9) zu einem Zeitpunkt, zu dem das Steuerventil (13) nach Ablauf der vorgegebenen Zeitspanne geschlossen ist, kleiner als eine vorgegebene Differenz ist.

2. Anomalie-Diagnosevorrichtung für ein Ölstrahlsteuerventil eines Verbrennungsmotors nach Anspruch 1, wobei
die vorgegebene Bedingung beinhaltet, dass der Öldruck des Ölstrahlkanals (9) niedriger als ein vorgegebener Wert ist oder dass eine Drehzahl des Verbrennungsmotors (2) niedriger als eine vorgegebene Drehzahl ist.

3. Anomalie-Diagnosevorrichtung für ein Ölstrahlsteuerventil eines Verbrennungsmotors nach Anspruch 1 oder 2, wobei
die vorgegebene Bedingung beinhaltet, dass ein Änderungsbetrag einer Drehzahl des Verbrennungsmotors (2) kleiner als ein vorgegebener Änderungsbetrag ist.

4. A Anomalie-Diagnosevorrichtung für ein Ölstrahlsteuerventil eines Verbrennungsmotors nach einem der Ansprüche 1 bis 3, wobei
die Steuereinheit (14) die Anomaliediagnosesteuerung unterbindet, wenn eine Öltemperatur des Ölstrahlkanals (9) niedriger als eine vorgegebene Temperatur ist.

## Revendications

1. Dispositif de diagnostic d'anomalie pour une soupape de commande de jet d'huile d'un moteur à combustion interne, le dispositif de diagnostic d'anomalie comprenant :
une pompe à huile (4) qui est entraînée par rotation d'un moteur à combustion interne (2) ;
un jet d'huile (12) qui injecte de l'huile en direction d'un piston du moteur à combustion interne (2) ;
une galerie de jet d'huile (9) qui envoie de l'huile à partir de la pompe à huile (4) dans le jet d'huile (12) ;
une soupape de commande (13) qui est disposée au niveau de la galerie de jet d'huile (9) et commande un écoulement d'huile dans le jet d'huile (12) ;
une soupape de commande (13) qui est disposée au niveau de la galerie de jet d'huile (9) et commande un écoulement d'huile vers le jet d'huile (12) ;
un capteur de pression d'huile (31) qui est disposé en amont de la soupape de commande (13) dans la galerie de jet d'huile (9) ; et
une unité de commande (14) qui commande l'ouverture et la fermeture de la soupape de commande (13), dans lequel
l'unité de commande (14) réalise une commande de diagnostic d'anomalie destinée à déterminer une anomalie dans la soupape de commande (13), dans un cas où le moteur à combustion interne (2) est dans un état de fonctionnement à coupure de carburant et une condition prédéterminée est satisfaite, et
dans la commande de diagnostic d'anomalie, l'unité de commande (14) place la soupape de commande (13) dans un état ouvert, et place la soupape de commande (13) dans un état fermé après l'écoulement d'une durée prédéfinie pendant laquelle la pression d'huile de la galerie de jet d'huile (9) est stabilisée, et détermine qu'il existe une anomalie dans la soupape de commande (13) lorsqu'une différence entre la pression d'huile de la galerie de jet d'huile (9) à un moment où la soupape de commande (13) est ouverte et la pression d'huile de la galerie de jet d'huile (9) à un moment où la soupape de commande (13) est fermée après l'écoulement de la durée est inférieure à une différence prédéterminée.

2. Dispositif de diagnostic d'anomalie pour une soupape de commande de jet d'huile d'un moteur à combustion interne selon la revendication 1, dans lequel
la condition prédéterminée comprend qu'une pression d'huile dans la galerie de jet d'huile (9) est inférieure à une valeur prédéterminée ou qu'une vitesse de rotation du moteur à combustion interne (2) est inférieure à une vitesse de rotation prédéterminée.

3. Dispositif de diagnostic d'anomalie pour une soupape de commande de jet d'huile d'un moteur à combustion interne selon la revendication 1 ou 2, dans lequel
la condition prédéterminée comprend qu'une quantité de changement d'une vitesse de rotation du moteur à combustion interne (2) est inférieure à une quantité de changement prédéterminée.

4. Dispositif de diagnostic d'anomalie pour une soupape de commande de jet d'huile d'un moteur à combustion interne selon l'une quelconque des revendications 1 à 3, dans lequel
l'unité de commande (14) interdit la commande de diagnostic d'anomalie lorsqu'une température d'huile de la galerie de jet d'huile (9) est inférieure à une température prédéterminée.
